# EUROPÄISCHE PATENTSCHRIFT

(11) **EP 1 496 199 B1**
(45) Veröffentlichungstag und Bekanntmachung des Hinweises auf die Patenterteilung: **04.05.2011**
(21) Anmeldenummer: 04090254.6
(22) Anmeldetag: 23.06.2004
(51) Int. Cl.: F01D 5/08

(54) **Gekühltes Hochdruckturbinenlaufrad für ein Flugtriebwerk**
Cooled high pressure turbine wheel for an aircraft engine
Roue de turbine haute pression refroidie pour un moteur d'avion

(30) Priorität: 11.07.2003 DE 10332561
(43) Veröffentlichungstag der Anmeldung: 12.01.2005
(73) Patentinhaber: Rolls-Royce Deutschland Ltd & Co KG, 15827 Dahlewitz (DE)
(72) Erfinder: Negulescu, Dimitrie, 14163 Berlin (DE); Lisiewicz, Stephan, 12307 Berlin (DE)
(74) Vertreter: Wablat, Wolfgang

(56) Entgegenhaltungen:
- EP-A1- 0 856 641
- EP-A1- 1 164 253
- WO-A-94/12770
- US-A1- 2002 012 589

## Beschreibung

Die Erfindung bezieht sich auf ein Hochdruckturbinenlaufrad gemäss Anspruch 1 für ein Flugtriebwerk, mit an der Umfangsfläche eines mit Scheibenfingern versehenen Scheibenkranzes mittels Schaufelfüßen radial angeordneten Turbinenschaufeln, wobei ein Scheibenfinger und die Schaufelhälse und Schaufelplattformen benachbarter Turbinenschaufeln einen Schaufelhalszwischenraum begrenzen, mit einer über mindestens einen Hochdruckkühlkanal in der jeweiligen Turbinenschaufel unter Verwendung von Hochdruckkühlluft bewirkten Innenkühlung und mit einem vom Hochdruckkühlkanal abgezweigten, in dem Schaufelhalszwischenraum mündenden Abzweigkühlkanal.

Die Leistung einer Turbine ist in hohem Maße von der Turbineneinlasstemperatur des Arbeitsmediums abhängig. Der Höhe dieser Temperatur sind jedoch Grenzen durch die Wärmebelastbarkeit des Materials der Turbinenlaufschaufeln gesetzt. Die Turbinenlaufschaufeln müssen daher möglichst effektiv gekühlt werden, um deren Wärmebelastung zu minimieren und eine möglichst hohe Lebensdauer zu gewährleisten. Die Hochdruckschaufeln eines Turbinenlaufrades sind üblicherweise mit sich in diesen erstreckenden Kühlkanälen ausgestattet. Die dem Turbinenlaufrad zugeführte Hochdruckkühlluft strömt über vom Laufschaufelfuß ausgehende Hockdruck-Kühlkanäle durch die Schaufel, um diese zu kühlen. Zur Dichtung gegen den Heißgaskanal hinter dem Leitrad dient sogenannte Sperrluft, die auch den Scheibenkranz und den Zwischenraum zwischen den jeweils benachbarten Schaufelhälsen der Turbinenlaufschaufeln umspült und über vom Schaufelhals ausgehende Niederdruckkanäle zur Kühlung des Schaufeldeckbandes oder anderer Schaufelbereiche mit geringerem Zuführdruckbedarf verwendet wird. Die Temperatur der Sperrluft ist jedoch so hoch, dass insbesondere der Scheibenkranz des Turbinenlaufrades, aber auch die Schaufelplattform und der Schaufelhals einer derart hohen Wärmebelastung ausgesetzt sind, dass die Lebensdauer des aus der Scheibe und den Laufschaufeln bestehenden Turbinenlaufrades dadurch erheblich eingeschränkt ist.

Bei einer aus US 3 834 831 bekannten Kühleinrichtung für eine Turbinenschaufel ist in einem im Schaufelhals ausgebildeten Hohlraum und in dem Zwischenraum zwischen zwei Schaufelhälsen benachbarter Turbinenschaufeln eine perforierte Kühlkammer angeordnet, die mit Kühlluft beschickt wird. Über die Perforation gelangt die Kühlluft an die Innenwände des Schaufelhalses und durchströmt die Schaufel in radialer Richtung durch vom Hohlraum im Schaufelhals ausgehende Kühlkanäle. Die über die zwischen den Schaufelhälsen angeordnete perforierte Kühlkammer separat zugeführte Kühlluft kühlt die Schaufelhälse an deren Außenseite, und die freie Umfangsfläche des Scheibenkranzes und verlässt den Zwischenraum über einen zwischen den benachbarten Schaufelplattformen bestehenden Spalt. Diese Kühleinrichtung für ein Turbinenrad ist insofern nachteilig, als für die Vielzahl der am Scheibenumfang und in Hohlräumen der Schaufelhälse angeordneten, mit Kühlluft versorgten Kühlkammern ein erheblicher Aufwand erforderlich ist.

Aus der US 2002/012589 A1 ist eine Plattformkühlung für Turbinenschaufeln bekannt, bei der ein Teil der in das Schaufelblatt eingeführten Kühlluft in den Schaufelhalszwischenraum geleitet wird und den Schaufelhals und die Plattform kühlt.

Die WO 94/12770 A beschreibt eine Turbinenschaufel, bei der von einem sich im Schaufelfuß einer Turbinenschaufel radial erstreckenden Hochdruckkühlkanal oberhalb der Plattform ein Kühlkanal abzweigt, der die Hohlkehle zwischen Schaufelblatt und Plattform kühlt und der unterhalb der Plattform mündet.

Die EP 0 864 641 A1 zeigt eine Kühleinrichtung für die Plattform von Turbinenlaufschaufeln, bei der ein Teil der über den Hochdruckluftkanal in das Schaufelblatt geleiteten Luft im Bereich des Schaufelhalses abgezweigt und in an der Unterseite der Plattform verlaufenden Kühlkanälen verteilt wird.

Nachteilig bei diesen Hochdruckturbinenlaufrädern mit einer Kühleinrichtung ist, dass sowohl der Scheibenkranz des Turbinenlaufrades als auch die Schaufelplattform und der Schaufelhals der Turbinenschaufeln so hohen Wärmebelastungen ausgesetzt sind, dass die Lebensdauer des aus dem Scheibenkranz und den Laufschaufeln bestehenden Turbinenlaufrades dadurch erheblich eingeschränkt ist.

Der Erfindung liegt die Aufgabe zugrunde, ein Hockdruckturbinenlaufrad für ein Flugtriebwerk mit geringem Bauaufwand so auszubilden, dass eine effektive mit geringem Bauaufwand so auszubilden, dass eine effektive Kühlung der Turbinenschaufeln und des Scheibenkranzes des Turbinenlaufrades bewirkt und eine lange Lebensdauer des Turbinenlaufrades und der Turbinenschaufeln gewährleistet sind.

Zur Lösung dieser Aufgabe sieht die Erfindung vor, dass der Hochdruckkühlkanal in der Turbinenschaufel vom Boden des Schaufelfußes ausgeht, dass der in Höhe der Schaufelplattform vom Hochdruckkühlkanal ausgehende Abzweigkühlkanal auf der Druckseite des Schaufelhalses im Schaufelhalszwischenraum mündet, dass die Mündung des Abzweigkühlkanals eine oder mehrere druckseitige Luftaustrittspralldüsen bildet, die im Schaufelhalszwischenraum unmittelbar auf die freie Oberfläche des Scheibenfingers gerichtet sind, dass vom Schaufelhalszwischenraum mindestens ein sich im Innern der Turbinenschaufel erstreckender, zum Schaufelhalsdeckband führender Niederdruckkühlkanal ausgeht, dass der mindestens eine Niederdruckkühlkanal von der dem Abzweigkühlkanal gegenüberliegenden Seite der benachbarten Turbinenschaufel ausgeht und der Abzweigkühlkanal von der Saugseite des Schaufelhalszwischenraumes ausgeht und auf der Druckseite der Turbinenschaufel mündet.

Ein wesentliches Erfindungsmerkmal besteht darin, dass von dem mindestens einen, sich im Innern der Turbinenschaufel erstreckenden Hochdruckkühlkanal, über den zur Kühlung des Schaustreckenden Hochdruckkühlluft zugeführt wird, ein Abzweigkühlkanal ausgeht, der in dem Schaufelhalszwischenraum von jeweils zwei benachbarten Turbinenschaufeln mündet. Dieser konstruktiv wenig aufwendigen Maßnahme liegt der Gedanke zugrunde, einen Teil der Hochdruckkühlluft unmittelbar für die Kühlung des Schaufelhalszwischenraums, insbesondere des Scheibenfingers des Turbinenrades zu verwenden und gleichzeitig die heiße Sperrluft von diesen Bereichen der Turbinenschaufel abzudrängen. Dadurch ist das Turbinenlaufrad besser gekühlt und das Material in geringerem Maße wärmebelastet, so dass die Lebensdauer der Scheibe und der Laufschaufeln deutlich erhöht werden kann.

Der mindestens eine Ausgang des mindestens einen Abzweigkühlkanals weist Pralldüsen auf, die vorzugsweise unmittelbar auf die Oberfläche des Scheibenfingers gerichtet sind und diesen mit einer Prallkühlung intensiv kühlt. Der Niederdruckkühlkanal, der vom Schaufelhalszwischenraum zweier benachbarter Turbinenschaufeln ausgeht, wird ebenfalls mit der im Schaufelhalszwischenraum befindlichen Kühlluft versorgt, die weniger heiß als die üblicherweise benutzte Sperrluft ist. Somit werden auch Schaufelteile, die einen geringeren Zuführdruck als die über den Hochdruckluftkanal versorgten Bereiche benötigen, wirksam gekühlt. Durch diese Maßnahmen wird die Lebensdauer noch weiter erhöht.

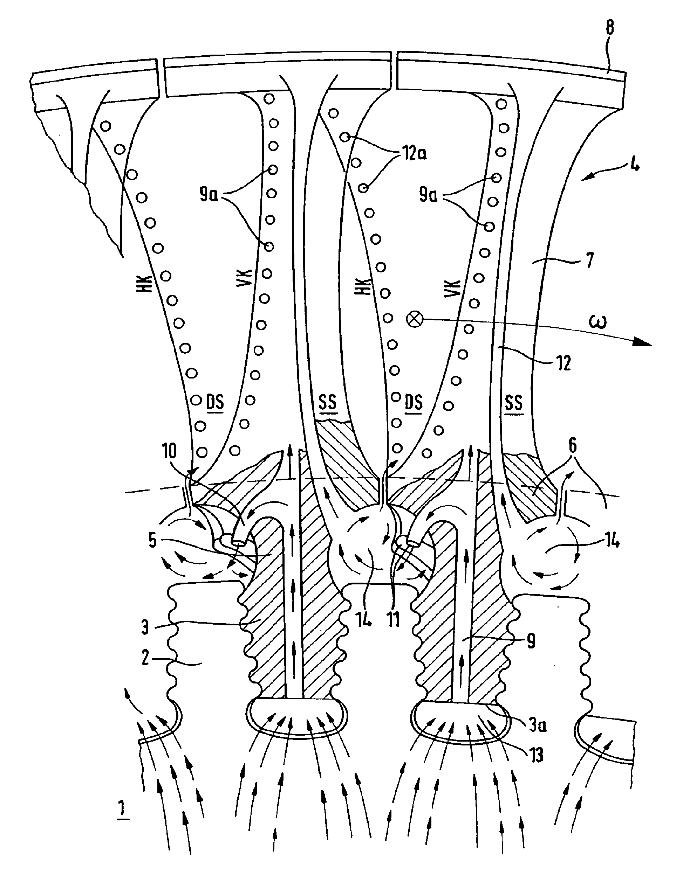

Ein Ausführungsbeispiel der Erfindung wird anhand der Zeichnung, in deren einziger Figur eine Vorderansicht eines Turbinenlaufrades im Bereich der Schaufeln teilweise im Schnitt wiedergegeben ist, näher erläutert.

Das Turbinenlaufrad umfasst einen Scheibenkranz 1 mit an dessen Umfang ausgebildeten Scheibenfingern 2. In dem zwischen den Scheibenfingern 2 verbleibenden Raum ist - jeweils mit dem Schaufelfuß 3 - eine Turbinenschaufel 4 gehalten. An den Schaufelfuß 3 schließen sich der Schaufelhals 5, die Schaufelplattform 6, das eine Vorder- und Hinterkante VK, HK sowie eine Druck- und Saugseite DS, SS aufweisende Schaufelprofil 7 und schließlich das Schaufeldeckband 8 an. Die gegenüberliegenden Schaufelhälse 5 und Schaufelplattformen 6 sowie die obere Fläche des Scheibenfingers 2 am Umfang des Scheibenkranzes 1 definieren einen Schaufelhalszwischenraum 14. Der Pfeil ω zeigt die Drehrichtung des Turbinenrades an. Im Innern der Turbinenschaufel 4 befindet sich mindestens ein Hochdruckkühlkanal 9, der vom Boden 3a des Schaufelfußes 3 ausgeht und über eine Vielzahl von Querkanälen, deren Mündungen mit dem Bezugszeichen 9a bezeichnet sind, zu den hoch wärmebelasteten Bereichen des Schaufelprofils 7, zum Beispiel der Vorderkante VK, führt. Von dem Hochdruckkühlkanal 9 geht etwa in Höhe der Schaufelplattform 6 außerdem ein Abzweigkühlkanal 10 aus, der auf der Druckseite DS des Schaufelhalses 5 im Schaufelhalszwischenraum 14 mündet. Die druckseitigen Luftaustrittspralldüsen 11 des Abzweigkühlkanals 10 sind auf die Umfangsfläche des Scheibenkranzes 1, das heißt, die freie obere Fläche des jeweiligen Scheibenfingers 2, gerichtet. Darüber hinaus befindet sich im Innern der Turbinenschaufel 4 mindestens ein Niederdruckkühlkanal 12, der zu den Bereichen der Turbinenschaufel 4 mit geringem Zuführdruckbedarf, hier dem Schaufeldeckband 8, führt und der von der den Luftaustrittspralldüsen 11 gegenüberliegenden Seite, das heißt, der Saugseite SS, des Schaufelhalses 5 der benachbarten Turbinenschaufel 4 ausgeht.

### Das zuvor beschriebene Kühlsystem hat folgende Funktion:

Über einen unterhalb des Schaufelfußes 3 und zwischen den Scheibenfingern 2 verbleibenden Zuführungskanal 13 strömt ein Hochdruck-Kühlluftstrom in den Hochdruckkühlkanal 9. Dieser Kühlluftstrom wird im Bereich des Abzweigkühlkanals (10) in einen ersten und einen zweiten Kühlluftteilstrom aufgeteilt. Der erste Kühlluftteilstrom wird weiter in das Schaufelprofil 7 und über die Querkanäle in den zu kühlenden heißen Schaufelprofilteilen an der Schaufelvorderkante VK über die Querkanalmündungen 9a wieder nach außen geleitet. Der zweite Kühlluftteilstrom gelangt über den Abzweigkühlkanal 10 und die Luftaustrittspralldüsen 11 unmittelbar auf die obere freie Fläche des Scheibenfingers 2, um dort zunächst eine hocheffektive Prallkühlung zu bewirken und darüber hinaus den druckseitigen Bereich des Schaufelhalses 5 und der Schaufelplattform 6 sowie den saugseitigen Bereich des Schaufelhalses 5 und der Schaufelplattform 6 der jeweils benachbarten Turbinenschaufel zu kühlen. Schließlich gelangt ein Teil der über den Abzweigkühlkanal 10 abgezweigten Kühlluft in den Niederdruckkühlkanal 12, um noch die einen geringeren Zuführdruck verlangenden Bereiche der Turbinenschaufel 4, zum Beispiel das Schaufeldeckband 8 oder die Hinterkante HK des Schaufelprofils 7, mit Kühlluft zu versorgen und entsprechend zu kühlen. Ein weiterer Teil der in den Schaufelhalszwischenraum 14 eingebrachten Kühlluft strömt über einen zwischen den benachbarten Schaufelplattformen 6 verbleibenden Spalt ab.

Durch das Eintragen eines Teils der Hochdruck-Kühlluft in den Schaufelhalszwischenraum 14 wird die dort üblicherweise anliegende heiße Sperrluft abgedrängt und belastet nicht die betreffenden Bereiche der Turbinenschaufel 4 bzw. des Scheibenkranzes 1. Sie wird auch nicht als Kühlluft für die Niederdruckkühlkanäle 12 verwendet. Durch das Abzweigen und Einbringen eines Hochdrucksekundärluftstroms in den Schaufelhalszwischenraum 14 wird mit geringem konstruktiven Aufwand eine bessere Kühlung der jeweiligen Scheibenfinger 2, Schaufelhälse 5 und Schaufelplattformen 6 sowie der von den Niederdruckkühlkanälen 12 sowie diesen zugeordneten Querkanälen mit Mündungen in 12a erfassten Schaufelteile erreicht, so dass sich die Lebensdauer des Turbinenlaufrades erhöht.

### Bezugszeichenliste

- 1: Scheibenkranz
- 2: Scheibenfinger
- 3: Schaufelfuß
- 3a: Boden von 3
- 4: Turbinenschaufel
- 5: Schaufelhals
- 6: Schaufelplattform
- 7: Schaufelprofil
- 8: Schaufeldeckband
- 9: Hochdruckkühlkanal
- 9a: Mündung der Querkanäle von 9
- 10: Abzweigkühlkanal
- 11: Luftaustrittspralldüsen
- 12: Niederdruckkühlkanal
- 12a: Mündung der Querkanäle von 12
- 13: Zuführungskanal
- 14: Schaufelhalszwischenraum
- VK: Vorderkante von 7
- HK: Hinterkante von 7
- DS: Druckseite
- SS: Saugseite
- ω: Drehrichtung des Turbinenrades

## Patentansprüche

1. Hochdruckturbinenlaufrad für ein Flugtriebwerk, mit an der Umfangsfläche eines mit Scheibenfingern (2) versehenen Scheibenkranzes (1) mittels Schaufelfüßen (3) radial angeordneten Turbinenschaufeln (4), wobei ein Scheibenfinger (2) und die Schaufelhälse (5) und Schaufelplattformen (6) benachbarter Turbinenschaufeln (4) einen Schaufelhalszwischenraum (14) begrenzen, mit einer über mindestens einen Hochdruckkühlkanal (9) in der jeweiligen Turbinenschaufel (4) unter Verwendung von Hochdruckkühlluft bewirkten Innenkühlung und mit einem vom Hochdruckkühlkanal (9) abgezweigten, in dem Schaufelhalszwischenraum (14) mündenden Abzweigkühlkanal (10),
**dadurch gekennzeichnet,**
**dass** der Hochdruckkühlkanal (9) in der Turbinenschaufel (4) vom Boden (3a) des Schaufelfußes (3) ausgeht,
**dass** der in Höhe der Schaufelplattform (6) vom Hochdruckkühlkanal (9) ausgehende Abzweigkühlkanal (10) auf der Druckseite (DS) des Schaufelhalses (5) im Schaufelhalszwischenraum (14) mündet,
**dass** die Mündung des Abzweigkühlkanals (10) eine oder mehrere druckseitige Luftaustrittspralldüsen (11) bildet,
die im Schaufelhalszwischenraum (14) unmittelbar auf die freie Oberfläche des Scheibenfingers (2) gerichtet sind,
**dass** vom Schaufelhalszwischenraum (14) mindestens ein sich im Innern der Turbinenschaufel (4) erstreckender, zum Schaufeldeckband (8) führender Niederdruckkühlkanal (12) ausgeht,
**dass** der mindestens eine Niederdruckkühlkanal (12) von der dem Abzweigkühlkanal (10) gegenüberliegenden Seite der benachbarten Turbinenschaufel (4) ausgeht und
**dass** der Abzweigkühlkanal (10) von der Saugseite (SS) des Schaufelhalszwischenraums (14) ausgeht und auf der Druckseite (DS) der Turbinenschaufel (4) mündet.

## Claims

1. High-pressure turbine rotor wheel for an aircraft engine, with turbine blades (4) radially arranged by means of blade roots (3) at the periphery of a disk rim (1) provided with disk lobes (2), with a disk lobe (2) and the blade necks (5) and blade platforms (6) of adjacent turbine blades (4) confining a blade neck interspace (14), with an internal cooling effected by high-pressure cooling air via at least one high-pressure cooling channel (9) in the respective turbine blade (4), and with a diverter cooling channel (10) branching off from the high-pressure cooling channel (9) and issuing into the blade neck interspace (14),
**characterized in**
**that** the high-pressure cooling channel (9) in the turbine blade (4) originates from the bottom (3a) of the blade root (3),
**that** the diverter cooling channel (10) originating from the high-pressure cooling channel (9) at blade platform (6) level issues on the pressure side (DS) of the blade neck (5) in the blade neck interspace (14),
**that** the mouth of the diverter cooling channel (10) forms one or more pressure-side air-exit impingement nozzles (11), which in the blade neck interspace (14) are directed immediately onto the free surface of the disk lobe (2),
**that** from the blade neck interspace (14) originates at least one low-pressure cooling channel (12), which extends within the turbine blade (4) and leads to the blade shroud (8),
**that** the at least one low-pressure cooling channel (12) originates from that side of the adjacent turbine blade (4), which is opposite to the diverter cooling channel (10), and
**that** the diverter cooling channel (10) originates from the suction side (SS) of the blade neck interspace (14) and issues on the pressure side (DS) of the turbine blade (4).

## Revendications

1. Roue de turbine haute pression pour un moteur d'avion, avec des aubes de turbine (4) disposées radialement au moyen de pieds d'aube (3) sur la surface périphérique d'une couronne de disque (1) munie de doigts de disque (2), sachant qu'un doigt de disque (2) et les collets d'aube (5) ainsi que les plateformes (6) d'aubes de turbine (4) voisines délimitent un espace intermédiaire entre collets d'aube (14), avec un refroidissement intérieur effectué par au moins un canal de refroidissement haute pression (9) dans l'aube de turbine respective (4) en mettant en oeuvre de l'air de refroidissement haute pression, et avec un canal de refroidissement dérivé (10) partant du canal de refroidissement haute pression (9) et débouchant dans l'espace intermédiaire entre collets d'aube (14),
**caractérisée en ce**
**que** le canal de refroidissement haute pression (9) dans l'aube de turbine (4) part du fond (3a) du pied d'aube (3),
**que** le canal de refroidissement dérivé (10) partant du canal de refroidissement haute pression (9) au niveau de la plateforme d'aube (6) débouche du côté refoulement (DS) du collet d'aube (5) dans l'espace intermédiaire entre collets d'aube (14),
**que** la bouche du canal de refroidissement dérivé (10) forme une ou plusieurs buse(s) d'impact d'air de sortie (11) du côté refoulement qui, dans l'espace intermédiaire entre collets d'aube (14), sont directement orientées sur la surface libre du doigt de disque (2),
**que** de l'espace intermédiaire entre collets d'aube (14) part au moins un canal de refroidissement basse pression (12) s'étendant à l'intérieur de l'aube de turbine (4) et conduisant à l'anneau de renforcement de l'aube (8), que l'au moins un canal de refroidissement basse pression (12) part du côté de l'aube de turbine (4) voisine opposé au canal de refroidissement dérivé (10) et que le canal de refroidissement dérivé (10) part du côté aspiration (SS) de l'espace intermédiaire entre collets d'aube (14) et débouche du côté refoulement (DS) de l'aube de turbine (4).
